# EUROPÄISCHE PATENTSCHRIFT

(11) **EP 3 022 450 B1**
(45) Veröffentlichungstag und Bekanntmachung des Hinweises auf die Patenterteilung: **04.09.2019**
(21) Anmeldenummer: 14733154.0
(22) Anmeldetag: 24.06.2014
(51) Int. Cl.: F16B 11/00, B29C 65/48, B29C 65/78

(54) **KLEBEHILFE UND VERFAHREN ZUM VERKLEBEN VON BAUTEILEN**
ADHESIVE AID AND METHOD FOR ADHERING COMPONENTS
AUXILIAIRE ADHÉSIF ET PROCÉDÉ DE COLLAGE DE PIÈCES

(30) Priorität: 18.07.2013 DE 102013214102
(43) Veröffentlichungstag der Anmeldung: 25.05.2016
(73) Patentinhaber: Bayerische Motoren Werke Aktiengesellschaft, 80809 München (DE)
(72) Erfinder: BRAUCH, Michael, 85598 Baldham (DE); EROGLU, Oguzhan, 88400 Biberach (DE)
(86) Internationale Anmeldenummer: PCT/EP2014/063278
(87) Internationale Veröffentlichungsnummer: WO 2015/007480

(56) Entgegenhaltungen:
- DE-A1-102006 036 931
- US-A- 3 029 486

## Beschreibung

Die vorliegende Erfindung betrifft eine Klebehilfe und ein Verfahren zum Verkleben von Bauteilen. Insbesondere betrifft die Erfindung eine Klebehilfe und ein Verfahren zum Verkleben von flächigen Bauteilen, wobei wenigstens ein Bauteil einen Durchbruch aufweist.

Bei der Verklebung von Bauteilen, insbesondere von flächigen Bauteilen, besteht ein Problem dahin, dass beim Fügen der Bauteile, wenn eines der Bauteile Durchbrüche wie etwa Löcher, Bohrungen, Ausschnitte, Ausstanzungen etc. aufweist, Klebstoff in die Durchbrüche hinein und durch diese über eine Bauteiloberfläche hinaus quellen kann. Dadurch können Vor- und Nachbearbeitungen erschwert oder zusätzlich erforderlich sein, wie etwa ein Entfernen überschüssigen Klebstoffs, ein Freilegen der Fügestelle, eine Dosierung der Klebstoffmenge, eine Markierung der Fügestelle etc.

Die US 3 029 486 A betrifft eine Befestigungsvorrichtung zum Fixieren einer Platte an einer Abstützung. Die Befestigungsvorrichtung weist einen ovalen Kopf auf, der in eine ovale Ausnehmung der Platte einführbar und durch Verdrehen um 90° um die Längsachse der Befestigungsvorrichtung an der Platte formschlüssig fixierbar ist.

Eine Aufgabe der vorliegenden Erfindung besteht darin, eine Möglichkeit einer Verklebung von Bauteilen, von denen wenigstens eines einen Durchbruch aufweist, zu schaffen, wobei die Nachteile des Standes der Technik wenigstens teilweise vermieden werden. Insbesondere besteht eine Aufgabe der vorliegenden Erfindung darin, den Austritt von Klebstoff in Durchbrüche von Bauteilen beim Verkleben zu vermeiden. Es ist eine weitere Aufgabe der vorliegenden Erfindung, Vor- und Nacharbeiten bei der Verklebung zu vermeiden oder wenigstens zu reduzieren.

Die vorstehend genannte Aufgabe wird wenigstens in Teilaspekten gelöst durch eine erfindungsgemäße Klebehilfe mit den Merkmalen des Anspruchs 1 und ein erfindungsgemäßes Verfahren mit den Merkmalen des Anspruchs 10. Dabei gelten Merkmale und Einzelheiten, die im Zusammenhang mit der erfindungsgemäßen Klebehilfe beschrieben sind, auch im Zusammenhang mit dem erfindungsgemäßen Verfahren sowie jeweils umgekehrt und wechselweise, so dass bezüglich der Offenbarung zu den einzelnen Erfindungsaspekten stets wechselseitig Bezug genommen wird beziehungsweise werden kann.

Nach einem Gesichtspunkt der vorliegenden Erfindung wird eine Klebehilfe zur Verwendung beim Verkleben eines ersten Bauteils mit einem zweiten Bauteil mittels eines in einem Klebespalt zwischen jeweiligen Klebeflächen der Bauteile befindlichen Klebstoffs, wobei wenigstens das erste Bauteil einen sich in dessen Klebefläche öffnenden Durchbruch aufweist, wobei die Klebehilfe einen zum Einsetzen in den Durchbruch ausgebildeten Einsetzabschnitt mit einer Einsetz-Außenkontur, die mit einer Innenkontur des Durchbruchs korreliert, und einen Verdrängungsabschnitt, der an den Einsetzabschnitt zur Verdrängung von Klebstoff in den Klebespalt angrenzt, aufweist, wobei der Verdrängungsabschnitt einen Überstand in radialer Richtung gegenüber der Einsetz-Außenkontur aufweist und nachgiebig, insbesondere elastisch, ausgebildet ist, vorgeschlagen.

Dabei wird unter einer Klebehilfe ein Hilfsmittel verstanden, das für die Zwecke der Verklebung verwendet wird, aber nicht zum Verbleib in den fertig verklebten Bauteilen vorgesehen ist. Ein Bauteil kann im Sinne der Erfindung jedes Teil mit einer räumlichen Struktur sein, unabhängig davon, ob es sich um ein Halbzeug, ein Halbfertigteil, ein Verbindungselement, eine Einzelschicht eines Laminats oder dergleichen handelt. Die erfindungsgemäße Klebehilfe eignet sich besonders für den Einsatz bei der Verklebung von Schichten eines Faserverbundbauteils, wie etwa CFK- oder GFK-Schichten, oder von Bauteilen aus Faserverbundwerkstoff wie etwa CFK oder GFK, kann aber auch für andere Werkstoffe wie beispielsweise Metall, Kunststoff oder Holz eingesetzt werden. Unter CFK wird ein mit Fasern (Langfasern oder Kurzfasern) aus Kohlenstoff verstärkter Kunststoff, gemeinhin als kohlenstofffaserverstärkter Kunststoff oder kohlefaserverstärkter Kunststoff bezeichnet, verstanden.

Ein Durchbruch ist im Sinne der Erfindung eine zwischen gegenüberliegenden Seiten eines Bauteils sich erstreckende Öffnung. Der Durchbruch kann eine Bohrung, eine Ausstanzung oder Auslassung sein und grundsätzlich jede Form aufweisen. Da die Einsetz-Außenkontur mit einer Innenkontur des Durchbruchs korreliert, liegt die Einsetz-Außenkontur wenigstens abschnittweise so an der Innenkontur des Durchbruchs an, dass ein sicherer Sitz der Klebehilfe in dem Durchbruch sichergestellt ist, wenn die Klebehilfe bestimmungsgemäß verwendet wird. Dies kann dadurch erreicht werden, dass die Einsetz-Außenkontur im Querschnitt der Innenkontur des Durchbruchs, gegebenenfalls mit einem gewissen Übermaß, entspricht, wobei eine Erstreckungsrichtung des Durchbruchs als eine axiale Richtung und eine Ebene quer zur Erstreckungsrichtung des Durchbruchs als Querschnittsebene zu verstehen ist. Entsprechend ist eine Richtung quer zu der axialen Richtung (Erstreckungsrichtung des Durchbruchs) als radiale Richtung zu verstehen. Die so definierten Richtungen in Bezug auf den Durchbruch fallen mit den Richtungsdefinitionen in Bezug auf die Klebehilfe zusammen, wenn diese bestimmungsgemäß verwendet wird.

In axialer Richtung kann sich die Einsetz-Außenkontur über die gesamte Dicke (Stärke) des ersten Bauteils, also über die gesamte "Länge" des Durchbruchs, erstrecken, kann aber auch länger oder kürzer sein.

In Umfangsrichtung gesehen kann es auch vorteilhaft sein, wenn zwischen der Einsetz-Außenkontur und der Innenkontur des Durchbruchs eine durchgängige Abdichtung über den Umfang einstellt. Es genügt aber für die Erfüllung einer Korrelation, wenn sich die Einsetz-Außenkontur nur stellenweise oder abschnittweise an dem Durchbruch abstützt, was beispielsweise bei einer Längsriffelung des Einsetzabschnitts der Fall sein kann. In diesem Fall wird durch die äußersten Konturabschnitte der Einsetz-Außenkontur, welche als Abstützabschnitte verstanden werden können, eine Korrelationskontur definiert, welche der Innenkontur des Durchbruchs in Umfangsrichtung entspricht. Im Falle eines Durchbruchs mit einem kreisförmigen Querschnitt, wie es beispielsweise bei einer Bohrung der Fall ist, würde die Korrelationskontur beispielsweise einem Umkreis, im Falle eines Durchbruchs mit beliebigem Querschnitt eine sog. "Umkontur" sein, die durch radial äußerste Abschnitte der Einsetz-Außenkontur aufgespannt wird. Ein Überstand gegenüber der Einsetz-Außenkontur wird in diesem Sinne als ein Überstand gegenüber der Korrelationskontur verstanden. Das bedeutet, dass der Überstand in radialer Richtung auch stets nach außen über die Innenkontur des Durchbruchs und damit auch insbesondere nach außen über die spaltseitige Kante des Durchbruchs übersteht. Durch den Überstand des Verdrängungsabschnitts weist dieser in Querschnittsrichtung (radialer Richtung) eine größere Ausdehnung als der Einsetzabschnitt, insbesondere als die Einsetz-Außenkontur, und somit auch eine größere Ausdehnung als der Durchbruch auf. Daher nimmt der Verdrängungsabschnitt in dem Klebespalt einen Raum ein, der in radialer Richtung von dem Rand des Durchbruchs aus in den Klebespalt hineinragt. Hierdurch wird auch Klebstoff von dem Durchbruch in radialer Richtung weg in den Klebespalt gedrückt bzw. ein Eindringen von Klebstoff in den durch den Verdrängungsabschnitt eingenommenen Raum verhindert, wodurch die Ränder des Durchbruchs zuverlässig von Klebstoff freibleiben, auch wenn der Klebstoff schon vorher aufgetragen wurde. Insgesamt wirkt die Klebehilfe als eine Klebstoffsperre, d.h., die Innenkontur des Durchbruchs und der Außenrand des Durchbruchs bleiben von Klebstoff frei. Dabei ist es vorteilhaft, wenn der eingesetzte Klebstoff vergleichsweise niedrigviskos ist. Es versteht sich, dass die Korrelation der Einsetz-Außenkontur mit der Innenkontur des Durchbruchs in axialer Richtung zumindest innerhalb des Durchbruchs vorhanden sein muss, aber nicht über die gesamte axiale Länge des Durchbruchs bzw. eine axiale Bauteildicke des ersten Bauteils erforderlich ist.

Aufgrund der nachgiebigen Ausbildung des Verdrängungsabschnitts kann der Überstand beim Entfernen der Klebehilfe durch den Durchbruch zusammengedrückt oder verformt werden, so dass die Klebehilfe aus dem Durchbruch gezogen werden kann, ohne dass Ränder des Bauteils beschädigt werden und ohne dass der Überstand abgerissen wird. Die nachgiebige Ausbildung des Verdrängungsabschnitts kann beispielsweise durch ein nachgiebiges Material wie etwa ein Elastomer oder durch konstruktive Mittel wie etwa eine Doppelkeilanordnung oder ein aufblasbare Ausführung verwirklicht werden. Dabei kann sich die insbesondere elastische Ausbildung auch auf den Überstand selbst beschränken oder dort besonders ausgeprägt sein. Es ist derzeit bevorzugt, dass die gesamte Klebehilfe einstückig aus einem Elastomer hergestellt ist. Die genaue Ausführung des Überstands wird der Fachmann anhand der Dimensionen und sonstigen Eigenschaften der Bauteile vornehmen. Vorzugsweise sind das Überstandsmaß des Überstands und die Nachgiebigkeit im Bereich des Überstands an Materialeigenschaften des ersten Bauteils im Bereich des Durchbruchs und an Hafteigenschaften des Klebstoffs an den Bauteilen derart angepasst, dass die Klebehilfe aus dem Durchbruch so entfernbar ist, dass Ränder des Durchbruchs wenigstens im Wesentlichen beschädigungsfrei bleiben und ein Klebeverbund zwischen den Bauteilen wenigstens im Wesentlichen unbeschadet bleibt.

In einer bevorzugten Ausführungsform der erfindungsgemäßen Klebehilfe ist eine Länge des Verdrängungsabschnitts an eine vorgeschriebene Dicke des Klebespalts angepasst. Dabei wird die Länge in axialer Richtung gemessen. Die vorgeschriebene Dicke des Klebespalts kann beispielsweise durch die Eigenschaften des verwendeten Klebstoffs, die Abmessungen und die Struktur der zu verklebenden Bauteile und andere Parameter bestimmt sein. Bei der Verklebung von CFK-Bauteilen kann der Klebespalt beispielsweise eine Dicke von ca. 0,1 bis 0,6 mm aufweisen, je nach Anwendungsfall sind auch Klebespaltdicken bis zu 5 mm möglich. Wenn die Länge des Verdrängungsabschnitts gleich oder größer als die vorgeschriebene Dicke des Klebespalts ist, wird durch den Überstand, der bei der Verklebung zwischen den Bauteilen eingeklemmt wird, ein Anschlag für einen Anpressweg bei einer Verklebung gebildet, wobei auch die Nachgiebigkeit des Überstands ausgenutzt werden kann. Dies dient auch der Prozesssicherheit bei der Verklebung. Zusätzlich wird auch zwischen den Klebeflächen ein zuverlässig von Klebstoff freier Raum gebildet, da der Verdrängungsabschnitt dann den Klebespalt über die gesamte axiale Länge ausfüllt.

In einer weiteren Ausführungsform der erfindungsgemäßen Klebehilfe bildet der Verdrängungsabschnitt einen axialen Abschluss der Klebehilfe. Mit anderen Worten, der Verdrängungsabschnitt weist eine insbesondere ebene Stirnfläche auf, die ein axiales Ende der Klebehilfe bildet. In dieser Ausführungsform der Klebehilfe können Verklebungen, bei denen nur das erste Bauteil einen Durchbruch aufweist, vorteilhaft verklebt werden. Wenn der Verdrängungsabschnitt wie vorstehend beschrieben wenigstens so lang wie der Klebespalt dick ist, bleibt auch die dem Durchbruch gegenüberliegende Fläche des zweiten Bauteils von Klebstoff frei, da die Stirnfläche des Verdrängungsabschnitts die Klebefläche des zweiten Bauteils kontaktiert und den Klebstoff von dort verdrängt.

In einer anderen Ausführungsform der erfindungsgemäßen Klebehilfe schließt sich ein zweiter Einsetzabschnitt in axialer Richtung an den Verdrängungsabschnitt an. Der zweite Einsetzabschnitt ist dabei wie der erste Einsetzabschnitt in einer zweiten Einsetz-Außenkontur an eine Innenkontur eines Durchbruchs des zweiten Bauteils angepasst. Dadurch können Verklebungen, bei denen auch das zweite Bauteil einen insbesondere mit dem Durchbruch des ersten Bauteils koaxialen Durchbruch aufweist, vorteilhaft verklebt werden, wobei ein Eindringen von Klebstoff auch in den Durchbruch des zweiten Bauteils verhindert werden kann. Die Klebehilfe kann auch zwei oder mehr Verdrängungsabschnitte ausweisen, die jeweils durch einen Einsetzabschnitt voneinander getrennt sind. Das heißt, auch mehr als zwei Bauteile können mit den genannten Vorteilen verklebt werden.

In einer Weiterbildung der erfindungsmäßen Klebehilfe weist die Klebehilfe einen an den Einsetzabschnitt angrenzenden Aufsetzabschnitt mit einer Aufsetzfläche zum Aufsetzen auf eine von der Klebefläche des ersten Bauteils abgewandten Freifläche des ersten Bauteils um den Durchbruch herum auf, wobei vorzugsweise eine Länge des Einsetzabschnitts einer Dicke des ersten Bauteils im Bereich des Durchbruchs entspricht. Hierdurch wird ein prozesssicherer Anschlag für das Einsetzen der Klebehilfe in den Durchbruch geschaffen, und ein Anpressen der Bauteile während des Verklebens kann wenigstens teilweise auch durch die Klebehilfe vermittelt werden. Leichte Bauteile können auch durch die Klebehilfe gehalten und zu dem zweiten Bauteil geführt werden. Dies kann auch die Handhabung erleichtern und Prozessschritte einsparen.

In einer weiteren Ausführungsform der erfindungsmäßen Klebehilfe weist die Klebehilfe einen Handhabungsabschnitt auf, der zur Handhabung der Klebehilfe ausgebildet ist. Der Handhabungsabschnitt ist dabei insbesondere an den Einsetzabschnitt angrenzend ausgebildet oder mit diesem zusammen ausgebildet, liegt aber jedenfalls auf einer von dem Verdrängungsabschnitt abgewandten Seite der Klebehilfe. Der Handhabungsabschnitt kann beispielsweise angesetzt sein, wie etwa in Form eines Schafts, an welchem die Klebehilfe manuell ergriffen werden kann. Andererseits kann der Handhabungsabschnitt auch integriert sein wie etwa in Form eines auf der von dem Verdrängungsabschnitt abgewandten Seite bzw. Stirnfläche des Einsetzabschnitts eingebrachten Innengewindes oder Sacklochs, was beispielsweise das Anbringen an einer Werkzeugaufnahme oder das Koppeln mit einem Roboterarm oder dergleichen ermöglichen kann.

In einer bevorzugten Ausführungsform der erfindungsgemäßen Klebehilfe ist die Klebehilfe vollständig aus einem elastischen Material, insbesondere einem Silikon oder einem elastomeren Kunststoff, hergestellt. Eine insgesamt elastische Ausbildung der Klebehilfe ist prozessual günstig und in der Herstellung besonders einfach. Insbesondere ist die Klebehilfe einstückig, d.h., aus einer Form, ausgebildet. Silikon ist als elastischer Werkstoff gut und kostengünstig verfügbar, es weist gute Gleiteigenschaften auf und haftet schlecht an den meisten anderen Werkstoffen, wenn es einmal vernetzt ist. Anstelle von Silikon kann auch ein anderer Werkstoff wie etwa elastomere Kunststoffe verwendet werden, insbesondere ein an den verwendeten Klebstoff angepasstes Material. Alternativ kann die Verwendung eines elastischen Materials auf bestimmte Bereiche, beispielsweise den Überstand an dem Verdrängungsabschnitt oder den Verdrängungsabschnitt insgesamt, einen an dem Durchbruch anliegenden Bereich des Einsetzabschnitts oder andere Bereiche beschränkt werden.

In einer Weiterbildung der erfindungsgemäßen Klebehilfe weist der Einsetzabschnitt einen Freistich an dem an den Verdrängungsabschnitt angrenzenden Ende auf. Mit anderen Worten, der Freistich ist in axialer Richtung gesehen zwischen dem Überstand und der Einsetz-Außenkontur angeordnet. Der Freistich erleichtert die Handhabung der Klebehilfe, da beim Einsetzen der Klebehilfe der Überstand durch den Freistich aufgenommen wird und beim Entfernen der Klebehilfe der Biegepunkt des Überstands nach radial einwärts verlagert wird. Dadurch können Beschädigungen und Abrisse des Überstands noch besser vermieden werden.

Die vorliegende Erfindung richtet sich in einem zweiten Gesichtspunkt auch auf ein Verfahren zum Verkleben eines ersten Bauteils mit einem zweiten Bauteil, wobei wenigstens das erste Bauteil einen sich in dessen Klebefläche öffnenden Durchbruch aufweist. Erfindungsgemäß weist das Verfahren die Verfahrensschritte auf:
a) Platzieren der vorstehend beschriebenen Klebehilfe in dem Durchbruch des ersten Bauteils;
b) Aufbringen eines fließfähigen Klebstoffs auf die Klebefläche des ersten Bauteils und/oder die Klebefläche des zweiten Bauteils;
c) Bringen des ersten Bauteils und des zweiten Bauteils aneinander mit einander zugewandten Klebeflächen, und vorzugsweise Ausüben eines vorbestimmten Klebedrucks auf das erste und das zweite Bauteil; und
d) Entfernen der Klebehilfe aus dem Durchbruch.

Die Platzierung der Klebehilfe erfolgt bestimmungsgemäß so, dass der Einsetzabschnitt in den Durchbruch des ersten Bauteils eingesetzt wird, wobei der Verdrängungsabschnitt der Klebehilfe in Einsetzrichtung aus dem Durchbruch herausragt. Vorzugsweise wird dasjenige Bauteil mit Klebstoff versehen, das die Klebehilfe bzw. den Durchbruch nicht aufweist bzw. frei von diesen ist. Durch die Verwendung einer erfindungsgemäßen Klebehilfe bringt ein erfindungsgemäßes Verfahren die gleichen Vorteile mit sich, wie sie in Bezug auf die Klebehilfe selbst beschrieben worden sind.

Das erfindungsgemäße Verfahren wird vorzugsweise so ausgeführt, dass das Einsetzen der Klebehilfe und das Entfernen der Klebehilfe von der von dem Klebespalt abgewandten Seite des ersten Bauteils aus ausgeführt werden. Dies bedeutet, dass in dem zweiten Bauteil kein Durchbruch zum Entfernen der Klebehilfe vorhanden sein muss und die von dem Klebespalt abgewandte Seite des zweiten Bauteils, mit anderen Worten, die Rückseite des Klebeverbunds, nicht einmal zugänglich sein muss.

Weitere Merkmale, Aufgaben und Wirkungen der Erfindung ergeben sich aus der Beschreibung und den beigefügten Zeichnungen.

In den Zeichnungen zeigt bzw. zeigen:
- Fig. 1: eine schematische Darstellung von zwei zu verklebenden Bauteilen in einem Schritt eines Verfahrens nach einem Ausführungsbeispiel der vorliegenden Erfindung,
- Fig. 2: eine schematische Darstellung von weiteren Schritten in dem Verfahren,
- Fig. 3: eine schematische Darstellung einer Klebehilfe nach einem eigenständigen Ausführungsbeispiel der vorliegenden Erfindung, zur Verwendung in dem Verfahren,
- Fig. 4: eine schematische Darstellung von weiteren Schritten in dem Verfahren,
- Fig. 5: eine schematische Darstellung eines weiteren Schritts in dem Verfahren,
- Fig. 6: eine schematische Darstellung einer Klebehilfe nach einem weiteren Ausführungsbeispiel der vorliegenden Erfindung, und
- Fig. 7: eine schematische Darstellung einer Klebehilfe nach einem weiteren Ausführungsbeispiel der vorliegenden Erfindung.

Nachstehend werden Ausführungsbeispiele der Erfindung anhand der beigefügten Zeichnungen im Einzelnen beschrieben. Dabei sind gleiche Bauteile in mehreren Figuren jeweils mit den gleichen Bezugszeichen versehen. Bauelemente und Merkmale, Zwecke und Wirkungen, die in Bezug auf ein Ausführungsbespiel beschrieben werden, sind, soweit nicht ausdrücklich oder ersichtlich ausgeschlossen, als in jedem anderen Ausführungsbeispiel anwendbar anzunehmen und sollen auch in Bezug auf das jeweils andere Ausführungsbeispiel als offenbart gelten, auch wenn sie dort nicht ausdrücklich gezeigt und/oder beschrieben werden. Es versteht sich ferner, dass die Zeichnungen als schematisch zu verstehen sind und ihnen keine Einschränkungen im Hinblick auf konkrete Abmessungen oder Größenverhältnisse entnommen werden sollen, es sei denn, dies wäre ausdrücklich so beschrieben.

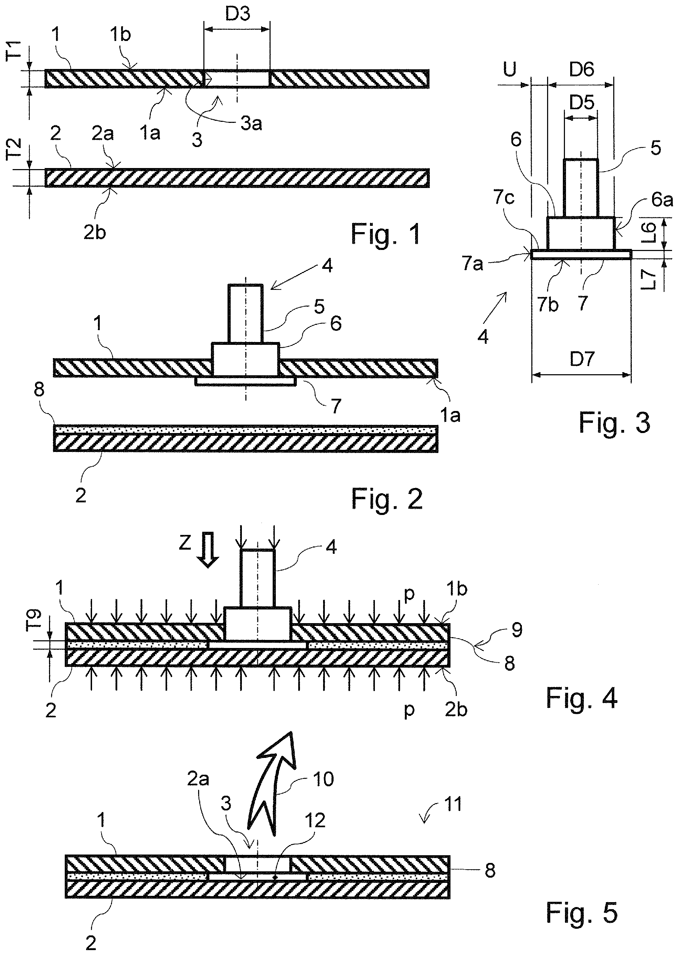

Ein Verfahren zum verkleben von Bauteilen gemäß einem ersten Ausführungsbeispiel der vorliegenden Erfindung unter Zuhilfenahme einer Klebehilfe 4, die ein eigenes Ausführungsbeispiel der vorliegenden Erfindung ist, wird nachstehend unter Bezugnahme auf Fign. 1 bis 5 beschrieben werden. Dabei zeigen Fign. 1, 2, 4 und 5 Verfahrensschritte in dem erfindungsgemäßen Verfahren in einer schematischen Darstellung, während Fig. 3 die in dem Verfahren verwendete Klebehilfe 4 schematisch in weiteren Einzelheiten zeigt.

Gemäß Fig.1 werden in einem ersten Verfahrensschritt ein erstes Bauteil 1 und ein zweites Bauteil 2 bereitgestellt. Gemäß der Darstellung in Fig. 1, welches das erste Bauteil 1 und das zweite Bauteil 2 in einem Schnitt darstellt, weist das erste Bauteil 1 eine erste Oberfläche, die auch als eine Klebefläche 1a bezeichnet wird, und eine zweite Oberfläche, die auch als eine Freifläche 1b bezeichnet wird, auf. Zwischen der Klebefläche 1a und der Freifläche 1b weist das erste Bauteil 1 eine Dicke bzw. Stärke T1 auf. Gleichermaßen weist das zweite Bauteil 2 eine erste Oberfläche, die auch als eine Klebefläche 2a bezeichnet wird, und eine zweite Oberfläche, die auch als eine Rückseite 2b bezeichnet wird, auf, wobei das zweite Bauteil 2 zwischen der Klebefläche 2a und der Rückseite 2b eine Dicke bzw. Stärke T2 aufweist. Ferner weist das erste Bauteil 1 einen Durchbruch 3 auf, der in diesem Ausführungsbeispiel ohne Beschränkung der Allgemeinheit eine Durchgangsbohrung ist. In Ausführungsvarianten, die auf das der vorliegenden Erfindung zugrundeliegende Prinzip keinen Einfluss haben, kann der Durchbruch 3 beliebige Konturformen aufweisen wie etwa ein Quadrat, ein Rechteck, ein sonstiges Vieleck, mit scharfen oder runden Ecken, oder eine beliebige Freiform sein. In dem dargestellten Ausführungsbeispiel weist der Durchbruch (Durchgangsbohrung) 3 einen Durchmesser D3 auf. Eine strichpunktierte Linie in Fig. 1 symbolisiert eine Mittellinie des Durchbruchs (der Durchgangsbohrung) 3 und definiert für nachfolgende Darstellungen eine axiale Richtung des Durchbruchs 3. Wie in Fig. 1 ersichtlich, verbindet der Durchbruch 3 die Freifläche 1b mit der Klebefläche 1a des Bauteils 1.

In Fig. 2 sind zwei Verfahrensschritte des erfindungsgemäßen Verfahrens des vorliegenden Ausführungsbeispiels schematisch dargestellt. Einerseits ist auf der Klebefläche 2a (hier nicht näher bezeichnet) des zweiten Bauteils 2 ein Klebstoff 8 aufgetragen worden. Zum anderen ist in dem Durchbruch 3 (hier nicht näher bezeichnet) des ersten Bauteils 1 eine Klebehilfe 4 eingesetzt worden, die nachstehend genauer beschrieben wird.

Die in Fig. 2 schematisch dargestellte Klebehilfe 4 ist in Fig. 3 noch einmal einzeln dargestellt, wobei die Darstellung in Fig. 3 die Bezeichnung jeweiliger Abschnitte und Oberflächen der Klebeflächen 4 beinhaltet. Gemäß der Darstellung in Fig. 3 weist die Klebehilfe 4 einen Handhabungsabschnitt 5, einen Einsetzabschnitt 6 und einen Verdrängungsabschnitt 7 auf, die in axialer Richtung aneinander angrenzen. Die Abschnitte 5, 6 und 7 sind im vorliegenden Ausführungsbeispiel zylindrische, koaxiale Abschnitte, die jeweils unterschiedliche Durchmesser aufweisen. Genauer gesagt, weist der Handhabungsabschnitt 5 einen Durchmesser D5 auf, weist der Einsetzabschnitt 6 einen Durchmesser D6 auf, der größer als der Durchmesser D5 des Handhabungsabschnitts 5 ist, und weist der Verdrängungsabschnitt 7 einen Durchmesser D7 auf, der größer als der Durchmesser D6 des Einsetzabschnitts 6 ist. Ferner weist der Einsetzabschnitt 6 eine Länge L6 auf und weist der Verdrängungsabschnitt 7 eine Länge L7 auf, wobei die Längen jeweils in axialer Richtung (Richtung der strichpunktiert dargestellten Mittellinie) gemessen werden. Eine in radialer Richtung äußere Fläche des Einsetzabschnitts 6 wird auch als eine Außenkontur 6a des Einsetzabschnitts 6 oder Einsetz-Außenkontur 6a bezeichnet, und eine in radialer Richtung äußere Umfangsfläche des Verdrängungsabschnitts 7 wird auch als eine Außenkontur 7a des Verdrängungsabschnitts 7 oder Verdrängungs-Außenkontur 7a bezeichnet. Die Klebehilfe 4 schließt in axialer Richtung mit einer Stirnfläche 7b des Verdrängungsabschnitts 7 ab. Der in radialer Richtung über den Durchmesser D6 des Einsetzabschnitts 6 hinausragende Teil des Verdrängungsabschnitts 7 wird auch als ein Überstand 7c bezeichnet, und ein radialer Abstand zwischen der Einsetz-Außenkontur 6a und der Verdrängungs-Außenkontur 7a wird auch als ein Überstandsmaß U bezeichnet.

Zurück zu Fig. 2 ist erkennbar, dass die Klebehilfe 4 mit Ihrem Einsetzabschnitt 6, der ein mittlerer Abschnitt der drei Abschnitte 5, 6 und 7 ist, in dem Durchbruch 3 des ersten Bauteil 1 eingesetzt ist, während der Verdrängungsabschnitt 7 der Klebehilfe 4 an der Klebefläche 1a des ersten Bauteils 1 anliegt.

In Fig. 4 sind zwei weitere Verfahrensschritte des erfindungsgemäßen Verfahrens dieses Ausführungsbeispiels schematisch dargestellt. Zum einen wurde das erste Bauteil 1 mit der in dem Durchbruch 3 eingesetzten Klebehilfe in einer Kleberichtung Z so an das zweite Bauteil 2 gebracht, dass die Klebefläche 1a (hier nicht näher bezeichnet) sich dem auf der Klebefläche 2a des zweiten Bauteils 2 aufgebrachten Klebstoff nähert. Sodann wird, wie in Fig. 4 durch zwei gegenparallele Pfeilescharen symbolisiert, ein Druck p auf die Freifläche 1b des ersten Bauteils 1, die Klebehilfe 4 und die Rückseite 2b des zweiten Bauteils 2 aufgebracht. Wie in Fig. 4 ersichtlich, nähern sich unter der Wirkung des Drucks p das erste Bauteil 1 und das zweite Bauteil 2 soweit an, das der unter der Stirnfläche 7b (siehe Fig. 3) der Klebehilfe 4 angeordnete Klebstoff 8 von dem Verdrängungsabschnitt 7 verdrängt wird und die Stirnfläche 7b an der Klebefläche 2a des zweiten Bauteils 2 anliegt. Durch dieses Anliegen oder Kontaktieren der Stirnfläche 7b an der Klebefläche 2a des zweiten Bauteils 2 wird der Anpressweg in Richtung Z begrenzt und bildet der Klebstoff 8 einen Klebespalt 9 einer Dicke T9, wobei die Länge L7 des Verdrängungsabschnitts 7 der Klebehilfe 4 der Dicke T9 des Klebespalts 9 mit einem geringen Übermaß entspricht, sodass eine gewisse Verquetschung des Überstands 7c erfolgt. Gleichzeitig wird, da die Einsetz-Außenkontur 6a mit der Innenwandung (Innenkontur) des Durchbruchs 3 derart korreliert, dass der Außendurchmesser D6 des Einsetzabschnitts 6 dem Durchmesser D3 des Durchbruchs 3 mit einem gewissen Übermaß entspricht, verhindert, dass Klebstoff 8 in den Durchbruch 3 und darüber hinaus auf die freie Fläche 1b des ersten Bauteils 1 gelangt.

In Fig. 5 ist ein weiterer Verfahrensschritt des erfindungsgemäßen Verfahrens schematisch dargestellt. Und zwar wurde gemäß der Darstellung in Fig. 5 die Klebehilfe 4 (hier nicht näher dargestellt) entfernt, was durch einen Pfeil 10 symbolisiert ist. Das Ergebnis dieses Verfahrens ist ein Schichtkörper 11 mit einem ersten Bauteil (einer ersten Schicht) 1, einem zweiten Bauteil (einer zweiten Schicht) 2 und einer dazwischen angeordneten Schicht eines Klebstoffs 8. Im Bereich des Durchbruchs 3 des ersten Bauteils 1 ist zwischen den Bauteilen 1, 2 kein Klebstoff 8 vorhanden, vielmehr hat sich dort, wo sich der Verdrängungsabschnitt 7 der Klebehilfe 4 befunden hatte, ein Leerraum 12 gebildet. Im Bereich des Leerraums 12 ist die Klebefläche 2a des zweiten Bauteils 2 ebenfalls vom Klebstoff frei.

Es ist anzumerken, dass gemäß der Darstellung in Fign. 2 bis 4 der Einsetzabschnitt 6 eine Länge L6 aufweist, die größer als die Dicke T1 des ersten Bauteils 1 ist. Dies ist nicht zwingend erforderlich, verleiht der Klebehilfe 4 aber eine erhöhte Stabilität.

Die Klebehilfe 4 dieses Ausführungsbeispiels ist ohne Beschränkung der Allgemeinheit vollständig und einstückig aus einem Elastomer wie etwa Silikon hergestellt. Die im Ausführungsbeispiel genannten Abmessungen können in einer praktischen Anwendung ohne Beschränkung der Allgemeinheit T1 = T2 = 3 mm, T9 = L7 = 0,3 mm, D3 = D6 = 6 mm (Nennmaß), D7 = 6,4 mm, D5 = 4 mm, L6 = 5 mm betragen.

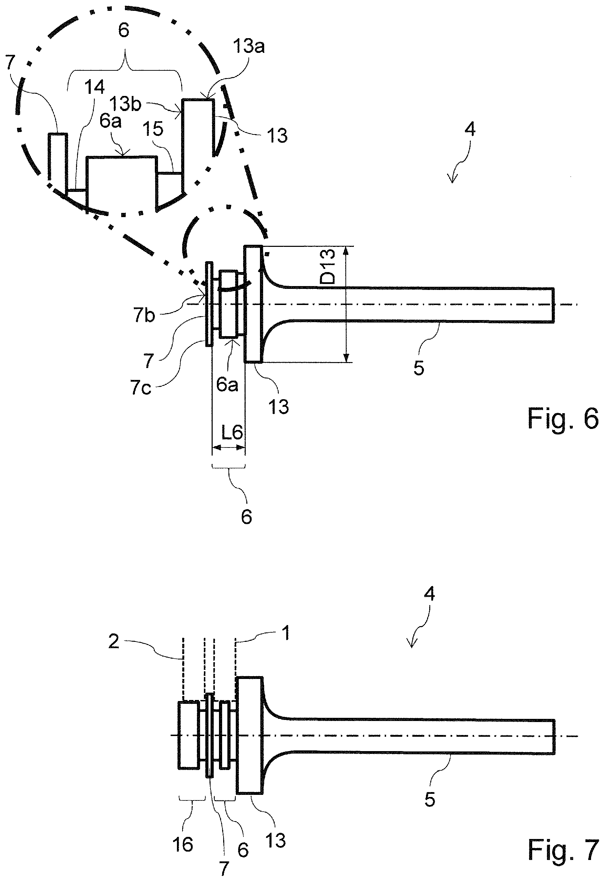

Fig. 6 ist eine schematische Darstellung einer Klebehilfe 4 gemäß einem weiteren Ausführungsbeispiel der vorliegenden Erfindung. Die Klebehilfe 4 des vorliegenden Ausführungsbeispiels ist eine Weiterbildung bzw. Abwandlung der Klebehilfe 4 von Fig. 3 und weist wie jene einen Handhabungsabschnitt 5, einen Einsetzabschnitt 6 und einen Verdrängungsabschnitt 7 auf. Zusätzlich ist zwischen dem Einsetzabschnitt 6 und dem Handhabungsabschnitt 5 ein Aufsetzabschnitt 13 ausgebildet. Der Aufsetzabschnitt 13 weist einen Durchmesser D13 auf, der größer als die Durchmesser des Handhabungsabschnitts 5, des Einsetzabschnitts 6 und des Verdrängungsabschnitts 7 ist und in Fortsetzung der praktischen Anwendung ohne Beschränkung der Allgemeinheit D13 = 10 mm betragen. Der Aufsetzabschnitt 13 ist dazu vorgesehen, auf der in Fig. 1 dargestellten Freifläche 1b des ersten Bauteils 1 aufzusetzen, wenn die Klebehilfe 4 in dem Durchbruch 3 eingesetzt ist. Die Länge L6 des Einsetzabschnitts 6 ist bei der Klebehilfe 4 dieses Ausführungsbeispiels an die Dicke T1 des ersten Bauteils 1 derart angepasst, dass das erste Bauteil 1 zwischen dem Verdrängungsabschnitt 7 und dem Aufsetzabschnitt 13 aufgenommen ist, wenn die Klebehilfe 4 in den Durchbruch 3 eingesetzt wird. Mit anderen Worten, die Länge L6 des Einsetzabschnitts 6 entspricht in dieser Abwandlung in etwa der Dicke T1 des ersten Bauteil 1.

Wie in einer in Fig. 6 strich-doppelpunktierten Kontur vergrößert herausgezogenen Einzelheit noch deutlicher ersichtlich, weist der Einsetzabschnitt 6 einen ersten Freistich 14 auf, der an den Verdrängungsabschnitt 7 angrenzt, und einen zweiten Freitisch 15, der an den Aufsetzabschnitt 13 angrenzt. Der erste Freistich 14 verleiht dem Verdrängungsabschnitt 7 eine größere Flexibilität beim einsetzen von und herausnehmen der Klebehilfe 4. Mit anderen Worten, beim Einsetzen der Klebehilfe 4 in den Durchbruch des ersten Bauteils 1 (siehe Fig. 1) kann der Überstand 7c des Verdrängungsabschnitts 7 so gestaucht und gebogen werden, das er in dem ersten Freistich 14 aufgenommen wird. Dies vermindert die mechanische Belastung des Überstands 7c des Verdrängungsabschnitts 7 und vermeidet mögliche Beschädigungen, welche die Funktion des Verdrängungsabschnitts 7 beeinträchtigen können. Der zweite Freistich 15 verleiht dem Einsetzabschnitt 6 eine größere Flexibilität und erleichtert somit auch die Handhabung der Klebehilfe 4. Der zweite Freistich 15 ist weniger tief als der erste Freistich 14. Ohne Beschränkung der Allgemeinheit kann die Tiefe des ersten Freistichs 14 etwa 2 mm betragen und kann die Tiefe des zweiten Freistichs 15 etwa 1 mm betragen. Obschon die Freistiche 14, 15 in der Figur mit zylindrischen Außenkonturen dargestellt sind, können die Freistiche 14, 15 auch konisch zu dem Verdrängungsabschnitt hin sich verjüngende Konturen aufweisen.

Fig. 7 ist eine schematische Darstellung einer Klebehilfe 4 eines noch weiteren Ausführungsbeispiels der vorliegenden Erfindung. Die Klebehilfe 4 dieses Ausführungsbeispiels ist eine Abwandlung der Klebehilfe 4 des vorhergehenden Ausführungsbeispiels (Fig. 6) und unterscheidet sich von dieser dadurch, dass sich an den Verdrängungsabschnitt 7 ein zweiter Einsetzabschnitt 16 anschließt. Der zweite Einsetzabschnitt 16 dient, wie in Fig. 7 durch gestrichelte Linien angedeutet, dem Einsetzen in einen Durchbruch des zweiten Bauteils 2. Mit anderen Worten, mit der Klebehilfe 4 gemäß dem Ausführungsbeispiel von Fig. 7 ist es möglich, auch Bauteile zu verkleben, welche jeweils einen Durchbruch aufweisen, wobei ein Eindringen von Klebstoff in den jeweiligen Durchbruch hinein und darüber hinaus verhindert werden kann. Vorteilhafterweise weist der zweite Einsetzabschnitt 16 eine Länge auf, die größer oder gleich der Dicke T2 des zweiten Bauteils 2 ist, um eventuell beim Einsetzen mitgeführten Klebstoff zuverlässig über den Durchbruch des zweiten Bauteils 2 hinauszubefördern.

In weiteren Abwandlungen können sich weitere Verdrängungs- und Einsetzabschnitte anschließen, um noch weitere Bauteile bzw. Schichten eines Schichtkörpers in einem Arbeitsschritt zu verkleben.

Die vorstehend beschriebenen Klebehilfen 4 gemäß den derzeit bevorzugten Ausführungsbeispielen sind aus einem nachgiebigen, insbesondere elastischen Material hergestellt, im vorliegenden Fall ohne Beschränkung der Allgemeinheit aus einem Silikon. Silikon hat den Vorteil, dass es an den meisten Werkstoffen nicht haftet und sich auch von einem flüssigen bzw. fließfähigen Klebstoff nach dessen Aushärtung leicht und rückstandsfrei lösen lässt. Silikon ist darüber hinaus sehr flexibel und weißt trotzdem eine hinreichende Eigenstabilität auf, um ein Ab- bzw. Ausreißen des Überstands 7c des Verdrängungsabschnitts 7 beim Einsetzen oder Herausnehmen der Klebehilfe 4 zu verhindern.

Die Erfindung wurde vorstehend anhand bevorzugter Ausführungsbeispiele, - varianten, -alternativen und Abwandlungen beschrieben und in den Figuren veranschaulicht. Diese Beschreibungen und Darstellungen sind rein schematisch und schränken den Schutzumfang der Ansprüche nicht ein, sondern dienen nur deren beispielhafter Veranschaulichung. Es versteht sich, dass die Erfindung auf vielfältige Weise ausgeführt und abgewandelt werden kann, ohne den Schutzumfang der Patentansprüche zu verlassen.

Beispielsweise ist es nicht zwingend, dass die Länge L7 des Verdrängungsabschnitts 7 der Dicke T9 des Klebespalts 9 mit Übermaß entspricht. Die Länge L7 des Verdrängungsabschnitts 7 kann genau der Dicke T9 des Klebespalts 9 entsprechen oder auch geringer sein, wenn es auf ein vollständiges Verdrängen des Klebstoffs von der Klebefläche 2b des zweiten Bauteils 2 nicht ankommt.

Auch muss der Einsetzabschnitt 6 mit seiner Außenkontur 6a nicht vollständig (dicht) an der Innenkontur 3a des Durchbruchs 3 anliegen, sofern durch die Wirkung des Verdrängungsabschnitts 7 ein Eintreten von Klebstoff 8 in den Durchbruch 3 wirksam verhindert wird. In diesem Fall genügt es, wenn die Außenkontur 6a des Einsetzabschnitts 6 an der Innenkontur 3a des Durchbruchs 3 so weit anliegt, dass die Klebehilfe 4 sicher in dem Durchbruch 3 sitzt.

Des Weiteren kann für Bauteilpaarungen, bei denen sowohl das erste Bauteil 1 als auch das zweite Bauteil 2 einen Durchbruch aufweisen, anstelle des zweiten Einsetzabschnitts 16 eine zweite Klebehilfe vorgesehen sein, die nur einen Einsetzabschnitt, aber keinen Verdrängungsabschnitt aufweist, und die von der Rückseite 2b her eingesetzt wird, um den Durchbruch in dem zweiten Bauteil 2 für die Dauer der Verklebung zu verschließen. Dabei wird vorzugsweise die zweite Klebehilfe zuerst eingesetzt, um zu vermeiden, dass durch die Klebehilfe 4 Klebstoff in den Durchbruch in dem zweiten Bauteil 2 geschoben wird.

Ferner wird in dem Ausführungsbeispiel ein Druck p auf die Freifläche 1b des ersten Bauteils 1, die Klebehilfe 4 und die Rückseite 2b des zweiten Bauteils 2 aufgebracht. Es kann vorteilhaft sein, wenn die Klebehilfe 4 von der Druckbeaufschlagung ausgenommen wird.

Anstelle von Silikon können auch andere silikonartige Werkstoffe und elastomere Kunststoffe eingesetzt werden, und die Klebehilfe kann auch aus abschnittweise unterschiedlichen Werkstoffen hergestellt werden.

### Bezugszeichenliste

- 1: Erstes Bauteil
- 1a: Klebefläche
- 1b: Freifläche
- 2: Zweites Bauteil
- 2a: Klebefläche
- 2b: Rückseite
- 3: Durchbruch
- 3a: Innenkontur
- 4: Klebehilfe
- 5: Halteabschnitt
- 6: Einsetzabschnitt
- 6a: Einsetz-Außenkontur
- 7: Verdrängungsabschnitt
- 7a: Verdrängungs-Außenkontur
- 7b: Stirnfläche
- 7c: Überstand
- 8: Klebstoff
- 9: Klebespalt
- 10: Entfernen der Klebehilfe
- 11: Schichtkörper
- 12: Leerraum
- 13: Aufsetzabschnitt
- 13a: Außenkontur
- 13b: Aufsetzfläche
- 14: Freistich
- 15: Freistich
- 16: Zweiter Einsetzabschnitt

- Dk: Durchmesser eines Elements k
- Lk: Länge eines Elements k
- Tk: Dicke (Stärke) eines Elements k
- U: Überstandsmaß
- Z: Verklebungsrichtung (Zustellrichtung; Dickenrichtung)

## Patentansprüche

1. Klebehilfe (4) zur Verwendung beim Verkleben eines ersten Bauteils (1) mit einem zweiten Bauteil (2) mittels eines in einem Klebespalt (9) zwischen jeweiligen Klebeflächen (1a, 2a) der Bauteile (1, 2) befindlichen Klebstoffs (8), wobei wenigstens das erste Bauteil (1) einen sich in dessen Klebefläche (1a) öffnenden Durchbruch (3) aufweist, wobei die Klebehilfe (4) aufweist:
- einen zum Einsetzen in den Durchbruch (3) ausgebildeten Einsetzabschnitt (6) mit einer Einsetz-Außenkontur (6a), die mit einer Innenkontur (3a) des Durchbruchs (3) korreliert, und
- einen Verdrängungsabschnitt (7), der an den Einsetzabschnitt (6) zur Verdrängung von Klebstoff (8) in dem Klebespalt (9) angrenzt,
**dadurch gekennzeichnet, dass** der Verdrängungsabschnitt (7) einen Überstand (7c) in radialer Richtung gegenüber der Einsetz-Außenkontur (6a) aufweist und wenigstens im Bereich des Überstands (7c) nachgiebig, insbesondere elastisch, ausgebildet ist.

2. Klebehilfe (4) nach Anspruch 1, **dadurch gekennzeichnet, dass** eine Länge (L7) des Verdrängungsabschnitts (7) an eine vorgeschriebene Dicke (T9) des Klebespalts (9) angepasst ist.

3. Klebehilfe (4) nach Anspruch 1 oder 2, **dadurch gekennzeichnet, dass** der Verdrängungsabschnitt (7) einen axialen Abschluss der Klebehilfe (4) bildet.

4. Klebehilfe (4) nach Anspruch 1 oder 2, **dadurch gekennzeichnet, dass** sich ein zweiter Einsetzabschnitt (16) in axialer Richtung an den Verdrängungsabschnitt (7) anschließt.

5. Klebehilfe (4) nach Anspruch 1 oder 2, **dadurch gekennzeichnet, dass** die Klebehilfe (4) zwei oder mehr Verdrängungsabschnitte aufweist, die jeweils durch einen Einsetzabschnitt voneinander getrennt sind.

6. Klebehilfe (4) nach einem der vorstehenden Ansprüche, **dadurch gekennzeichnet, dass** die Klebehilfe (4) einen an den Einsetzabschnitt (6) angrenzenden Aufsetzabschnitt (13) mit einer Aufsetzfläche (13b) zum Aufsetzen auf eine von der Klebefläche (1a) des ersten Bauteils (1) abgewandte Freifläche (1b) des ersten Bauteils (1) um den Durchbruch (3) herum aufweist, wobei vorzugsweise eine Länge (L6) des Einsetzabschnitts (6) einer Dicke (T1) des ersten Bauteils (1) im Bereich des Durchbruchs (3) entspricht.

7. Klebehilfe (4) nach einem der vorstehenden Ansprüche, **dadurch gekennzeichnet, dass** die Klebehilfe (4) einen Handhabungsabschnitt (5) zur Handhabung der Klebehilfe (4) aufweist.

8. Klebehilfe (4) nach einem der vorstehenden Ansprüche, **dadurch gekennzeichnet, dass** die Klebehilfe (4) vollständig, vorzugsweise einstückig, aus einem elastischen Material, insbesondere einem Silikon oder einem elastomeren Kunststoff, hergestellt ist.

9. Klebehilfe (4) nach einem der vorstehenden Ansprüche, **dadurch gekennzeichnet, dass** der Einsetzabschnitt (6) einen Freistich (14) an dem an den Verdrängungsabschnitt (7) angrenzenden Ende aufweist.

10. Verfahren zum Verkleben eines ersten Bauteils (1) mit einem zweiten Bauteil (2), wobei wenigstens das erste Bauteil (1) einen sich in dessen Klebefläche (1a) öffnenden Durchbruch (3) aufweist, wobei das Verfahren die Verfahrensschritte aufweist:
a) Platzieren einer Klebehilfe (4) gemäß einem der vorstehenden Ansprüche in den Durchbruch (3) des ersten Bauteils;
b) Aufbringen eines fließfähigen Klebstoffs (8) auf die Klebefläche (1a) des ersten Bauteils (1) und/oder die Klebefläche (2a) des zweiten Bauteils (2);
c) Bringen des ersten Bauteils (1) und des zweiten Bauteils (2) aneinander mit einander zugewandten Klebeflächen (1a, 2a), und vorzugsweise Ausüben eines vorbestimmten Klebedrucks auf das erste und das zweite Bauteil ; und
d) Entfernen der Klebehilfe (4) aus dem Durchbruch (3).

11. Verfahren gemäß Anspruch 10, wobei das Einsetzen der Klebehilfe (4) und das Entfernen der Klebehilfe (4) von der von dem Klebespalt (9) abgewandten Seite des ersten Bauteils aus ausgeführt werden.

## Claims

1. A gluing aid (4) for use when gluing a first component (1) to a second component (2) by means of an adhesive (8) located in a gluing gap (9) between respective gluing faces (1a, 2a) of the components (1, 2), wherein at least the first component (1) has an aperture (3) which opens into the gluing face (1a) thereof, wherein the gluing aid (4) has:
- an insertion portion (6) designed for inserting into the aperture (3), with an outer insertion contour (6a) which correlates with an internal contour (3a) of the aperture (3), and
- a displacement portion (7) which adjoins the insertion portion (6) for displacing adhesive (8) into the gluing gap (9),
**characterised in that**
the displacement portion (7) has a projecting length (7c) in the radial direction relative to the outer insertion contour (6a) and is designed to be resilient, especially elastic at least in the region of the projecting length (7c).

2. A gluing aid (4) according to Claim 1, **characterised in that** a length (L7) of the displacement portion (7) is adapted to a prescribed thickness (T9) of the gluing gap (9).

3. A gluing aid (4) according to Claim 1 or Claim 2, **characterised in that** the displacement portion (7) forms an axial termination of the gluing aid (4).

4. A gluing aid (4) according to Claim 1 or Claim 2, **characterised in that** a second insertion portion (16) adjoins the displacement portion (7) in the axial direction.

5. A gluing aid (4) according to Claim 1 or Claim 2, **characterised in that** the gluing aid (4) has two or more displacement portions which are separated from each other in each case by an insertion portion.

6. A gluing aid (4) according to one of the preceding claims, **characterised in that** the gluing aid (4) has a placement portion (13), adjoining the insertion portion (6), with a placement face (13b) for placing on a free face (1b) of the first component (1) which faces away from the gluing face (1a) of the first component (1) around the aperture (3), wherein preferably a length (L6) of the insertion portion (6) corresponds to a thickness (T1) of the first component (1) in the region of the aperture (3).

7. A gluing aid (4) according to one of the preceding claims, **characterised in that** the gluing aid (4) has a handling portion (5) for handling the gluing aid (4).

8. A gluing aid (4) according to one of the preceding claims, **characterised in that** the gluing aid (4) is produced in its entirety, preferably in one piece, from an elastic material, especially a silicone or an elastomeric plastics material.

9. A gluing aid (4) according to one of the preceding claims, **characterised in that** the insertion portion (6) has an undercut (14) on the end adjoining the displacement portion (7).

10. A method for gluing a first component (1) to a second component (2), wherein at least the first component (1) has an aperture (3) which opens into the gluing face (1a) thereof, wherein the method has the method steps:
a) placing a gluing aid (4) according to one of the preceding claims in the aperture (3) of the first component;
b) applying a free-flowing adhesive (8) to the gluing face (1a) of the first component (1) and/or the gluing face (2a) of the second component (2);
c) bringing the first component (1) and the second component (2) together with gluing faces (1a, 2a) facing each other, and preferably exerting a predetermined gluing pressure on the first and the second component; and
d) removing the gluing aid (4) from the aperture (3).

11. A method according to Claim 10,
wherein the insertion of the gluing aid (4) and the removal of the gluing aid (4) are carried out from that side of the first component which faces away from the gluing gap (9).

## Revendications

1. Auxiliaire de collage (4) destiné à être utilisé pour coller une première pièce (1) avec une seconde pièce (2) au moyen d'une colle (8) située dans un intervalle de collage (9) entre des surfaces de collage respectives (1a, 2a) des pièces (1, 2), au moins la première pièce (1) comprenant un perçage (3) s'ouvrant dans sa surface de collage (la), l'auxiliaire de collage (4) comprenant :
- un segment d'insertion (6) formé pour permettre son insertion dans le perçage (3), ayant un contour externe d'insertion (6a) qui est en corrélation avec le contour interne (3a) du perçage (3), et
- un segment de refoulement (7) qui délimite le segment d'insertion (6) pour permettre le refoulement de colle (8) dans l'intervalle de collage (9),
**caractérisé en ce que**
le segment de refoulement (7) comporte une saillie (7c) en direction radiale par rapport au contour externe d'insertion (6a), et est flexible, en particulier élastique au moins dans la zone de la saillie (7c).

2. Auxiliaire de collage (4) conforme à la revendication 1,
**caractérisé en ce que**
la longueur (L7) du segment de refoulement (7) est adaptée à une épaisseur requise (T9) de l'intervalle de collage (9).

3. Auxiliaire de collage (4) conforme à la revendication 1 ou 2,
**caractérisé en ce que**
le segment de refoulement (7) forme l'extrémité axiale de l'auxiliaire de collage (4).

4. Auxiliaire de collage (4) conforme à la revendication 1 ou 2,
**caractérisé en ce qu'**
un second segment d'insertion (16) se connecte en direction axiale au segment de refoulement (7).

5. Auxiliaire de collage (4) conforme à la revendication 1 ou 2,
**caractérisé en ce qu'**
il comporte au moins deux segments de refoulement qui sont respectivement séparés l'un de l'autre par un segment d'insertion.

6. Auxiliaire de collage (4) conforme à l'une des revendications précédentes,
**caractérisé en ce qu'**
il comporte un segment d'appui (13) délimitant le segment d'insertion (6) ayant une surface d'appui (13b) lui permettant de s'appuyer sur la surface libre (1b) de la première pièce (1) opposée à la surface de collage (la) de cette première pièce (1) autour du perçage (3), et de préférence la longueur (L6) du segment d'insertion (6) correspond à l'épaisseur (T1) de la première pièce (1) dans la zone du perçage (3).

7. Auxiliaire de collage (4) conforme à l'une des revendications précédentes,
**caractérisé en ce qu'**
il comporte un segment de manipulation (5) permettant sa manipulation.

8. Auxiliaire de collage (4) conforme à l'une des revendications précédentes,
**caractérisé en ce qu'**
il est réalisé totalement, de préférence en une seule pièce à partir d'un matériau élastique, en particulier un silicone ou un matériau synthétique élastomère.

9. Auxiliaire de collage (4) conforme à l'une des revendications précédentes,
**caractérisé en ce que**
le segment d'insertion (6) comporte un dégagement (14) à son extrémité voisine du segment de refoulement (7).

10. Procédé de collage d'une première pièce (1) avec une seconde pièce (2) selon lequel au moins la première pièce (1) comporte un perçage (3) s'ouvrant dans sa surface de collage (la), ce procédé comprenant les étapes suivantes consistant à :
a) positionner un auxiliaire de collage (4) conforme à l'une des revendications précédentes dans le perçage (3) de la première pièce,
b) introduire une colle fluide (8) sur la surface de collage (la) de la première pièce (1) et/ou sur la surface de collage (2a) de la seconde pièce (2),
c) positionner l'une sur l'autre la première pièce (1) et la seconde pièce (2), leurs surfaces de collage (la, 2a) étant tournées l'une vers l'autre, et de préférence exercer une pression de collage prédéfinie sur la première pièce et sur la seconde pièce, et
d) enlever l'auxiliaire de collage (4) du perçage (3).

11. Procédé conforme à la revendication 10,
selon lequel l'introduction et l'extraction de l'auxiliaire de collage (4) sont mises en oeuvre à partir de la face située à l'opposé de l'intervalle de collage (9) de la première pièce.
